# EUROPÄISCHE PATENTSCHRIFT

(11) **EP 0 999 955 B1**
(45) Veröffentlichungstag und Bekanntmachung des Hinweises auf die Patenterteilung: **30.05.2001**
(21) Anmeldenummer: 98948679.0
(22) Anmeldetag: 27.07.1998
(51) Int. Cl.: B60R 16/02, B60R 21/00, B60R 21/32

(54) **SYSTEM ZUR ÜBERTRAGUNG VON DATEN IN EINEM KRAFTFAHRZEUG**
SYSTEM FOR TRANSMITTING DATA IN A MOTOR VEHICLE
SYSTEME POUR TRANSMETTRE DES DONNEES DANS UN VEHICULE A MOTEUR

(30) Priorität: 05.08.1997 DE 19733866
(43) Veröffentlichungstag der Anmeldung: 17.05.2000
(73) Patentinhaber: SIEMENS AKTIENGESELLSCHAFT, 80333 München (DE)
(72) Erfinder: HERMANN, Stefan, D-93096 Köfering (DE)
(86) Internationale Anmeldenummer: DE9802128
(87) Internationale Veröffentlichungsnummer: WO9907580

(56) Entgegenhaltungen:
- EP-A- 0 384 258
- WO-A-97/21565
- DE-A- 3 811 217
- DE-A- 4 201 468
- DE-A- 19 526 809
- US-A- 5 745 027

## Beschreibung

Die Erfindung betrifft ein System zur Übertragung von Daten zwischen einer Satellitenstation und einer Zentralstation in einem Kraftfahrzeug.

Bei Insassenschutzsystemen in Kraftfahrzeugen, z. B. Airbagsystemen, Gurtstraffersystemen usw., sind in manchen Fällen zusätzlich zu einer eine Aufprallerkennung bewirkenden Zentralstation eine oder mehrere Satellitenstationen vorgesehen, die z. B. in Seitenbereichen des Kraftfahrzeugs angeordnet sind und dort eine Aufprallerkennung oder Unfall-Früherkennung bewirken. Solche Satellitenstationen übertragen bei Erkennen eines Aufpralls oder Unfallgefahrenzustands Daten zur Zentralstation, so daß diese geeignete Auslösemaßnahmen steuern kann. Die Satellitenstation kann auch so ausgelegt sein, daß sie in regelmäßigen Abständen Nachrichten (Lebenszeichen) zu der Zentralstation überträgt.

In der EP 0 693 401 A2 ist ein Datenübertragungsverfahren offenbart, bei dem die Satellitenstationen über eigene Datenleitungen mit der Steuereinheit der Zentralstation verbunden sind. Die notwendige Spannungsversorgung der Satellitenstationen ist in dieser Druckschrift nicht näher erörtert, findet aber üblicherweise über eigene Spannungsversorgungsleitungen statt. Die Daten werden bei dem bekannten Verfahren in Form von pulsdauermodulierten Signalen übertragen, die konstante Periode aufweisen und deren Tastverhältnis die zu übertragende Information repräsentiert. Diese Impulse werden über die Datenleitungen unmittelbar an Eingänge der Zentraleinheit der Zentralstation angelegt. Der für die Datenübertragung und die Spannungsversorgung der Satellitenstationen erforderliche Leitungs- und Verdrahtungsaufwand ist verhältnismäßig hoch.

In der DE 42 01 468 A1, die die Merkmale des Oberbegriffs des Patentanspruchs 1 zeigt, ist ein Bussystem mit einer integrierten Spannungsversorgung für alle Systemteilnehmer, insbesondere für Kraftfahrzeuge, vorgeschlagen, bei dem alle Bussystem-Komponenten durch eine gemeinsame, offensichtlich ungeregelte Spannungsquelle gespeist werden. Jeder Teilnehmer ist mit einer ein- und ausschaltbaren Stromquelle versehen, durch deren Ein- und Ausschaltung Stromimpulse entsprechend zu den zu übertragenden Daten erzeugt werden, die auf das Bussystem gegeben werden.

Die DE 42 27 577 C1 offenbart ein Verfahren zur bidirektionalen Signalübertragung nach dem Master-Slave-Prinzip, wobei die den Master und die Slaves verbindende Leitung sowohl zur Signalübertragung als auch zur Stromversorgung der Slave-Module dient. Das Mastersignal wird spannungscodiert, wohingegen die Slavesignale stromcodiert werden. Dieses Mastersignal wird kontinuierlich ohne Unterbrechung auch in Zeiten, in denen keine Datenübertragung erfolgt, gesendet.

Aus der US 4 621 170 ist eine Datenübertragungseinrichtung bekannt, bei der die Versorgungsspannung durch eine Batterie breitgestellt wird und die Daten in Form von Stromimpulsen überlagert werden, die durch ein- und ausschaltbare Stromquellen generiert werden.

Der Erfindung liegt die Aufgabe zugrunde, ein System zur Übertragung von Daten zwischen einer Satellitenstation und einer Zentralstation in einem Kraftfahrzeug zu schaffen, das eine zuverlässige Datenübertragung unter Verringerung des für die Satellitenstation erforderlichen Verdrahtungsaufwands ermöglicht.

Diese Aufgabe wird mit den im Patentanspruch 1 genannten Merkmalen gelöst.

Vorteilhafte Ausgestaltungen der Erfindung sind in den Unteransprüchen angegeben.

Bei dem erfindungsgemäßen System dient die Datenübertragungsleitung zugleich als Stromversorgungsleitung für die Satellitenstation, so daß hierfür kein zusätzlicher Leitungs- und Verdrahtungsaufwand vorgesehen werden muß. Die Stromversorgung der Satellitenstation erfolgt mittels eines in der Zentralstation angeordneten rückgekoppelten Stromgenerators, der durch einen Regler mit Tiefpassverhalten angesteuert wird. Hierdurch wird erreicht, daß der Ausgangswiderstand des Stromgenerators im Frequenzbereich des zu übertragenden Datensignals sehr hoch ist und der Stromgenerator somit keine Verzerrung der Amplitude und/oder Phase des übertragenen Datensignals hervorruft. Dadurch wird hohe Datenübertragungsqualität sichergestellt. Vorzugsweise ist der Stromregler als Differenzverstärker mit Spannungsreferenzsignal ausgebildet, so daß die Ruhespannung auf der Datenübertragungsleitung unabhängig vom Stromverbrauch der Satellitenstation im wesentlichen gleich gehalten wird. Da der Stromgenerator und der diesen steuernde Spannungsregler im Vergleich zum Sendedatengenerierungsabschnitt der Satellitenstation in dem für die Übertragung relevanten Frequenzbereich hochohmig sind, können die zu übertragenden Datensignale einfach der Ruhespannung der Datenübertragungsleitung in Form von Stromimpulsen überlagert werden. Diese Stromimpulse führen selbst bei kleiner Größe aufgrund des hohen (Ausgangs-) Widerstands des Stromgenerators zu starken, und damit empfängerseitig leicht detektierbaren Spannungsimpulsen. Diese Datensignale können auf der Empfangsseite (Zentralstation oder Satellitenstation) durch einen Komparator oder einen Fensterkomparator einfach und zuverlässig demoduliert werden.

Die Hochohmigkeit der Datenübertragungsleitung im hochfrequenten Bereich, d. h. im Bereich der Datensendefrequenz und darüber, bringt den weiteren Vorteil, daß sich die Datenübertragungsleitung gut anpassen läßt, so daß Reflexionen und Resonanzen vermieden werden. Hierdurch wird weiterhin erreicht, daß der Datensignalhub auf der Datenübertragungsleitung kaum gedämpft und somit kaum störanfällig ist.

Auch gegenüber einem Vorschlag, zur Satellitenstation-Energieversorgung und Datenübertragung eine reine Stromschnittstelle zwischen der Zentralstation und dem Satelliten vorzusehen und als Datenempfänger in der Zentralstation eine Strommeßschaltung vorzusehen, ergeben sich bei der Erfindung Vorteile. Bei Verwendung einer Stromschnittstelle mit zentralstationsseitiger Strommeßschaltung können nämlich die große Streuung des Eingangswiderstands, der Leitungskapazitäten und auch des Stromverbrauchs in der Satellitenstation dazu führen, daß sich bei erwünschten, höheren Datenübertragungsgeschwindigkeiten Störungen bei der Datenübertragung einstellen, so daß diese Parameter eng überwacht und eingestellt werden müssen. Auch kann sich das Problem ergeben, daß der Stromverbrauch der Stromschnittstelle von der Signalform der übertragenen Daten abhängt. Bei der vorliegenden Erfindung stellen sich diese Probleme nicht.

Die erfindungsgemäße Schaltung wirkt nämlich im unteren Frequenzbereich wie eine Spannungsschnittstelle und im Datenübertragungsfrequenzbereich wie eine Stromschnittstelle mit hohem Leitungsanschlußwiderstand.

Bei der Erfindung werden die Daten vorzugsweise in Form von Stromimpulsen auf der Datenübertragungsleitung zu oder von der Zentralstation übertragen, wobei eine AMI-Codierung (Alternate-Mark-Inversion-Codierung) des Datenstroms möglich ist.

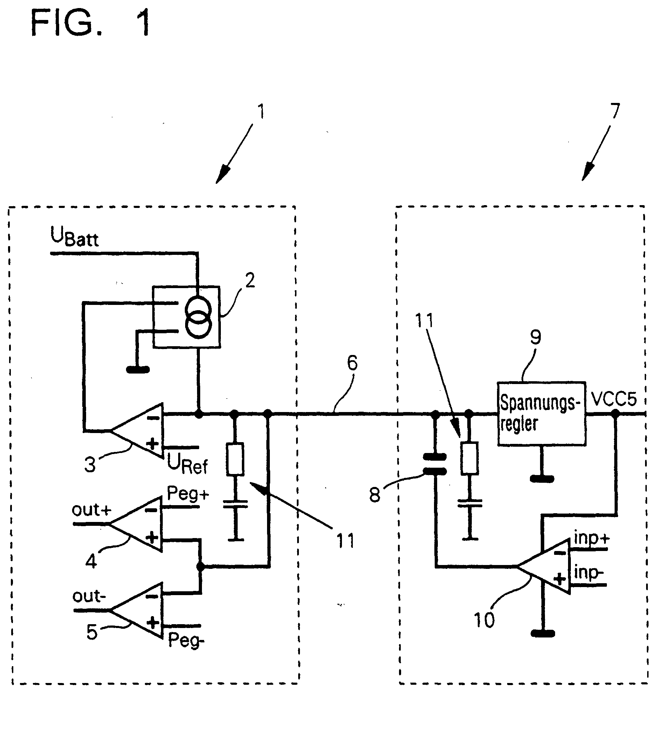

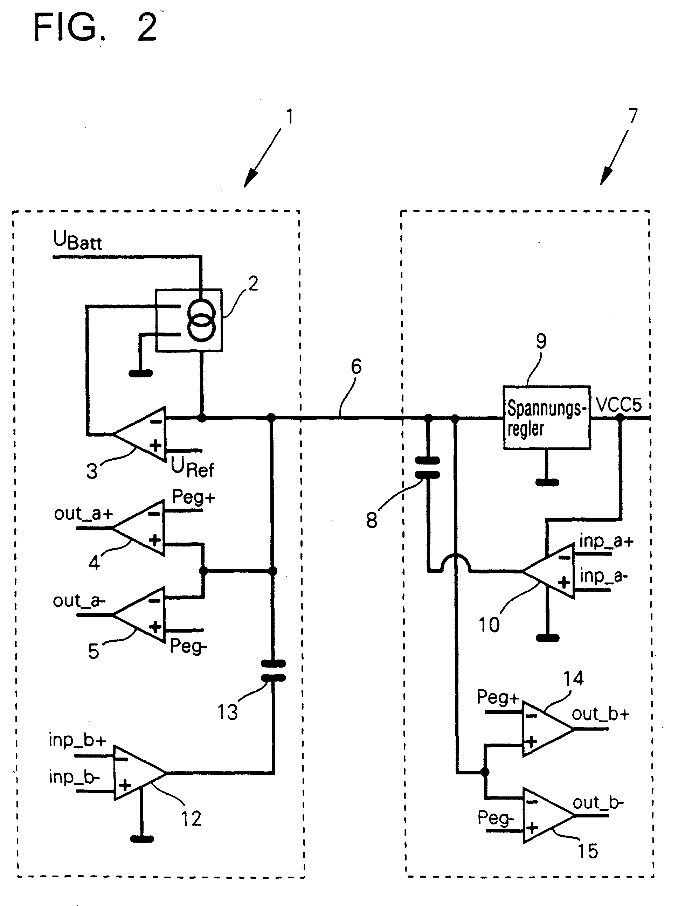

Die Erfindung wird nachstehend anhand von Ausführungsbeispielen unter Bezugnahme auf die Fig. 1 und Fig. 2 näher beschrieben. Wie in Fig. 1 und 2 gezeigt ist, ist eine Zentralstation 1 über eine Datenübertragungsleitung 6 mit einer Satellitenstation 7 verbunden. Die Datenstation 1 und die Satellitenstation 7 bilden, gegebenenfalls zusammen mit weiteren Satellitenstationen, ein Datenverarbeitungssystem in einem Kraftfahrzeug und steuern vorzugsweise ein Insassenschutzsystem, z. B. ein Airbagsystem oder ein Gurtstraffersystem. Die hierzu in der Zentralstation erforderlichen Komponenten, wie Mikroprozessor, Speicher, Ausgabeschnittstellen und so weiter sind bekannt und in Fig. 1 nicht gezeigt. Die Zentralstation 1 weist weiterhin einen geregelten Stromgenerator 2 auf, der eingangsseitig mit Batteriespannung vom Kraftfahrzeug-Bordnetz gespeist wird und ausgangsseitig mit der Datenübertragungsleitung 6 verbunden ist. In der Regelschleife des Stromgenerators (Stromquelle) 2 ist ein Regler 3 in Form eines Differenzverstärkers vorhanden, dessen einer Eingang ("-"-Eingang) mit der Übertragungsleitung verbunden ist und an dessen anderem Eingang ("+"-Eingang) ein Spannungsreferenzsignal URef anliegt. Der Differenzverstärker 3 besitzt Tiefpassverhalten, wobei die Grenzfrequenz deutlich niedriger, vorzugsweise etwa eine Größenordnung tiefer, als die Datenübertragungsrate auf der Datenübertragungsleitung 6 ist. Dadurch wird erreicht, daß die Spannung am Ausgang des Stromgenerators 2, und damit auf der Datenübertragungsleitung 6, im Mittelwert der Spannung des Spannungreferenzsignals URef entspricht, und daß der Ausgangswiderstand des Stromgenerators 2 samt Regler in dem Frequenzbereich des zu übertragenden Datensignals sehr hoch ist.

Die Zentralstation 1 weist weiterhin einen Fensterkomparator auf, der durch zwei Vergleicher (Differenzverstärker) 4 und 5 gebildet ist, von denen jeweils ein invertierender bzw. nicht invertierender Eingangsanschluß gemeinsam mit der Datenübertragungsleitung 6 verbunden ist. Am invertierenden Eingang des Vergleichers 4 liegt ein Referenzsignal Peg+ an, dessen Pegel höher ist als die Ruhespannung der Datenübertragungsleitung 6, jedoch niedriger liegt als der Pegel eines positiven Datenimpulses. Demgegenüber ist der nicht invertierende Eingang des Vergleichers 5 mit einer Referenzspannung Peg- gespeist, deren Pegel niedriger ist als die Ruhespannung der Datenübertragungsleitung 6, jedoch höher ist als der Pegel eines auf der Datenübertragungsleitung auftretenden, negativen Datenimpulses (bezogen auf das Niveau der Ruhespannung). Der Fensterkomparator 4, 5 ermöglicht somit eine Demodulation der auf der Datenübertragungsleitung 6 übertragenen Daten insbesondere auch dann, wenn diese AMI-codiert sind. Unter AMI-Codierung wird hierbei eine Codierung verstanden, bei der jeder zweite positive Impuls eines Impulszugs, der nur aus Nullen (Nullpegel) und Einsen (positiver Pegel) besteht, invertiert wird, so daß ein unipolares Signal in ein bipolares Signal mit einem verschwindend geringen Gleichstromanteil umgewandelt wird. Bei dieser Übertragungsform bleibt die mittlere Spannung auf der Datenübertragungsleitung 6 auch bei Datenübertragung im wesentlichen unverändert, da kein zusätzlicher Gleichspannungsanteil überlagert wird und der Differenzverstärker 3 aufgrund seines Tiefpassverhaltens auf die hohe Datensendefrequenz nicht ansprechen kann. Damit führt die Datenübertragung nicht zu einer Nachregelung des Stromgenerators 2, so daß die durchschnittliche Spannung auf der Datenübertragungsleitung 6 (Ruhespannung) nicht verändert wird.

Es ist auch möglich, die Daten in unkodierter Form, d. h. in Form eines Impulszuges aus positiven Pegeln und Nullpegeln, zu übertragen. In diesem Fall ist ein einziger Komparator 4 oder 5 ausreichend.

Bei der in Fig. 1 dargestellten Schaltung mit Fensterkomparator 4, 5 erzeugt der Vergleicher 4 bei jedem ins Positive laufenden Impuls einen entsprechenden positiven Ausgangsimpuls, während der Vergleicher 5 bei einem ins Negative laufenden Datenimpuls einen positiven Ausgangsimpuls erzeugt. Diese von den Vergleichern 4, 5 abgegebenen Ausgangsimpulse werden z. B. über ein Oder-Glied zusammengefaßt, an dessen Ausgang somit wieder die vor der AMI-Codierung vorhandene, ursprüngliche Impulsfolge erzeugt wird.

In der Satellitenstation 7 sind ebenfalls an sich bekannte, nicht gezeigte Komponenten wie etwa Sensoren, Mikroprozessor und so weiter vorhanden. Zusätzlich ist ein Spannungsregler 9 vorgesehen, der eingangseitig mit der Datenübertragungsleitung 6 verbunden ist und ausgangsseitig die Versorgungsspannung (z. B. 5 V) für die Komponenten der Satellitenstation 7 geregelt erzeugt. Die Satellitenstation 7 wird somit mit einer konstanten Spannung versorgt, wobei der Leistungsbedarf von der Zentralstation 1 über die Leitung 6 gedeckt wird. In der Satellitenstation 7 ist ein Modulator in Form eines Stromgenerators 10 mit Hochpassverhalten vorhanden, der die AMI-codierten, zur Zentralstation 1 zu übertragenden Daten generiert und dessen Eingänge durch eine entsprechende Steuerschaltung entsprechend den zu sendenden Daten angesteuert werden. Der Ausgang des Stromgenerators 10 ist direkt, oder vorzugsweise über eine Kapazität 8, mit der Datenübertragungsleitung 6 verbunden. Die Kapazität 8 koppelt die am Ausgang des Stromgenerators 10 abgegebenen, bipolaren Stromimpulse auf die Datenübertragungsleitung 6, so daß die durch die Stromimpulse hervorgerufenen Spannungsimpulse einfach auf die Ruhespannung der Datenübertragungsleitung 6 aufaddiert werden, d. h. die Spannung bei positivem (Strom-)Impuls über die Ruhespannung erhöht wird und bei negativem Impuls unter die Ruhespannung (nicht aber unter Null) verringert wird. Da der Stromgenerator 2 und der Spannungsregler 9 sowie der Ausgang des Modulators 10 hochohmig sind, erfolgt diese Überlagerung der zu übertragenden, AMI-codierten Datenimpulse ohne Verzerrung.

Wenn die zu übertragenden Daten von der Satellitenstation 7 in unkodierter Form gesendet werden sollen, kann der Stromgenerator 10 durch einen breitbandigen Stromgenerator ersetzt werden.

Wie in Fig. 1 weiter gezeigt ist, ist die Datenübertragungsleitung 6 mindestens an einem Ende, vorzugsweise aber an beiden Enden, mit ihrem Wellenwiderstand abgeschlossen. Hierdurch wird hohe Störfestigkeit gegenüber elektromagnetischen Störsignalen erreicht. Dieser Wellenwiderstandsabschluß ist in der Zentralstation 1 und der Satellitenstation 7 jeweils durch ein (möglichst) nahe an dem jeweiligen Ende der Datenübertragungsleitung 6 angeordnetes, zwischen diese und Masse geschaltetes Serien-RC-Glied 11 erzielt, das auf den Wellenwiderstand der Datenübertragungsleitung 6 abgestimmt ist.

In Fig. 2 ist ein Ausführungsbeispiel eines Datenübertragungssystems dargestellt, bei dem zusätzlich zur Datenübertragung von der Satellitenstation 7 zur Zentralstation 1 (wie bei dem ersten Ausführungsbeispiel gemäß Fig. 1) auch eine Datenübertragung in der Gegenrichtung, d.h. von der Zentralstation 1 zu der Satellitenstation 7, möglich ist. Die Schnittstelle ist somit als bidirektionale Schnittstelle ausgelegt, die eine Datenübertragung im Halbduplexverfahren ermöglicht.

Zusätzlich zu den anhand Fig. 1 bereits beschriebenen Komponenten der Zentralstation 1 und der Satellitenstation 7 weist die Zentralstation 1 einen Stromgenerator 12 auf, der direkt, oder vorzugsweise über eine Kapazität 13, an die Datenübertragungsleitung 6 angeschlossen ist. Der Stromgenerator 12 erzeugt die von der Zentralstation 1 zur Satellitenstation 7 zu sendenden Daten in kodierter, vorzugsweise AMI-kodierter Form in gleichartiger Weise wie der vorstehend bereits beschriebene Stromgenerator 10 (für den Sendebetrieb in Gegenrichtung). Die anhand des Stromgenerators 10 bereits erläuterte Ausgestaltung und Funktionsweise trifft für den Stromgenerator 12 in gleicher Weise zu:

Die von dem Stromgenerator 12 in Form von Stromimpulsen erzeugten Daten führen aufgrund des hohen Innenwiderstands des Stromgenerators 2 zu entsprechend starken Spannungsimpulsen auf der Datenübertragungsleitung 6, die in der Satellitenstation 7 durch einen Fenstervergleicher 14, 15 erfaßt und umgesetzt werden. Der Aufbau und die Funktionsweise sowie die Ausgestaltungsvarianten des Fensterkomparators 14, 15 entsprechen denjenigen des vorstehend bereits beschriebenen Fensterkomparators 4, 5.

Auch wenn dies nicht gezeigt ist, kann die Datenübertragungsleitung 6 in Fig. 2 in gleicher Weise wie in Fig. 1 mit Wellenwiderstandsabschlüssen 11 abgeschlossen sein. Hierbei ist insbesondere von Vorteil, daß zur Datengenerierung anstelle von ebenfalls verwendbaren Spannungsverstärkern Stromgeneratoren 10 und/oder 12 verwendet werden, die hochohmigen Ausgang besitzen. Alle mit der Datenübertragungsleitung 6 verbundenen Komponenten sind somit, von der Datenübertragungsleitung 6 aus gesehen, hochohmig, so daß ein exakter Abschluß mit Wellenwiderstand erreicht werden kann.

Die erfindungsgemäße Schaltung ist für Basisband-Übertragung und AMI-Übertragung geeignet. Weiterhin ist die Übertragungsstrecke breitbandig angepaßt. Die Erfindung schafft somit eine neuartig aufgebaute Schnittstellenschaltung für die Datenübertragung zwischen der Satellitenstation 7 und der Zentralstation 1 sowie für die über die gleiche Leitung erfolgende Leistungsversorgung der Satellitenstation.

## Patentansprüche

1. Datenübertragungssystem zur Verwendung in einem Kraftfahrzeug, insbesondere für ein Insassenschutzsystem, mit einer Zentralstation (1) und einer Satellitenstation (7), die über eine zur Datenübertragung dienende Datenübertragungsleitung (6) miteinander verbunden sind, über die die Daten in Form von Stromimpulsen übertragen werden,
gekennzeichnet durch einen mit Tiefpassverhalten rückgekoppelten Stromgenerator (2) in der Zentralstation (1), der ausgangsseitig mit der Datenübertragungsleitung (6) verbunden ist und über die Datenübertragungsleitung (6) die Versorgungsleistung für die Satellitenstation (7) bereitstellt, und einen den Stromgenerator (2) regelnden Spannungsverstärker (3), der eingangsseitig mit der Datenübertragungsleitung (6) verbunden ist sowie mit einem Spannungsreferenzsignal (Uref) gespeist wird und mit seinem Ausgang mit einem Steuereingang des Stromgenerators (2) gekoppelt ist.

2. Datenübertragungssystem nach Anspruch 1, dadurch gekennzeichnet, daß in der Satellitenstation (7) und/oder in der Zentralstation (1) ein Stromgenerator (10, 12) zur Erzeugung der die zu übertragenden Daten repräsentierenden Stromimpulse vorhanden ist, die der auf der Datenübertragungsleitung (6) vorhandenen Ruhespannung, vorzugsweise mit unterschiedlichem Vorzeichen, überlagert werden.

3. Datenübertragungssystem nach Anspruch 1 oder 2, dadurch gekennzeichnet, daß in der Zentralstation (1) und/oder in der Satellitenstation (7) ein mit der Datenübertragungsleitung (6) verbundener Fensterkomparator (4, 5, 14, 15) zur Demodulation der Daten vorgesehen ist.

4. Datenübertragungssystem nach einem der Ansprüche 1 bis 3,
dadurch gekennzeichnet, daß in der Satellitenstation (7) ein eingangsseitig an die Datenübertragungsleitung (6) angeschlossener Spannungsregler (9) vorhanden ist, der ausgangsseitig die Versorgungsspannung für die Satellitenstation (7) bereitstellt.

5. Datenübertragungssystem nach einem der Ansprüche 1 bis 4, dadurch gekennzeichnet, daß die Datenübertragungsleitung beidseitig mit einem Wellenwiderstandsabschluß (11), insbesondere in Form eines Serien-RC-Glieds, abgeschlossen ist.

6. Datenübertragungssystem nach einem der Ansprüche 1 bis 5, dadurch gekennzeichnet, daß die Grenzfrequenz der Tiefpaß-Regelung des Stromgenerators (2) im wesentlichen eine Größenordnung niedriger ist als die Datenübertragungsfrequenz.

7. Datenübertragungssystem nach einem der vorhergehenden Ansprüche, dadurch gekennzeichnet, daß die zu übertragenden Daten in der Satellitenstation (7) in Form von codierten, insbesondere AMI-codierten, Impulsen mit positiven und negativen Polaritäten auf die Datenübertragungsleitung (6) gekoppelt werden und in der Zentralstation (1) demoduliert werden.

## Claims

1. Data transmission system for use in a motor vehicle, in particular for a vehicle occupant protection system, having a central station (1) and a satellite station (7) which are connected to one another via a data transmission line (6) which is used to transmit data and via which the data are transmitted in the form of current pulses, characterized by a current generator (2), fed back with low-pass filter characteristics, in the central station (1), which is connected at the output end to the data transmission line (6) and makes available the power supply for the satellite station (7) via the data transmission line (6), and by a voltage amplifier (3) which regulates the current generator (2) and is connected at the input end to the data transmission line (6) and is fed with a voltage reference signal (Uref) and is coupled by its output to a control input of the current generator (2).

2. Data transmission system according to Claim 1, characterized in that in the satellite station (7) and/or in the central station (1) there is a current generator (10, 12) for generating the current pulses which represent the data to be transmitted and which are superposed on the quiescent voltage present on the data transmission line (6), preferably with a different sign.

3. Data transmission system according to Claim 1 or 2, characterized in that a window comparator (4, 5, 14, 15) which is connected to the data transmission line (6) is provided in the central station (1) and/or in the satellite station (7) in order to demodulate the data.

4. Data transmission system according to one of Claims 1 to 3, characterized in that in the satellite station (7) there is a voltage regulator (9) which is connected at the input end to the data transmission line (6) and at the output end makes available the supply voltage for the satellite station (7).

5. Data transmission system according to one of Claims 1 to 4, characterized in that the data transmission line is connected at both ends to a characteristic impedance termination (11), in particular in the form of a serial RC element.

6. Data transmission system according to one of Claims 1 to 5, characterized in that the cutoff frequency of the low-pass control of the current generator (2) is essentially an order of magnitude lower than the data transmission frequency.

7. Data transmission system according to one of the preceding claims, characterized in that the data to be transmitted are input into the data transmission line (6) in the form of encoded, in particular AMI-encoded pulses with positive and negative polarities in the satellite station (7), and are demodulated in the central station (1).

## Revendications

1. Système de transmission de données pour utilisation dans un véhicule automobile, notamment pour un système de protection des passagers, comportant une station (1) centrale et une station (7) satellite qui sont reliées l'une à l'autre par l'intermédiaire d'une ligne (6) de transmission de données qui sert à la transmission de données par laquelle les données sont transmises sous la forme d'impulsions de tension, caractérisé par un générateur (2) de courant rétrocouplé à comportement de passe-bas dans la station (1) centrale, qui est relié côté sortie à la ligne (6) de transmission de données et qui met à disposition par l'intermédiaire de la ligne (6) de transmission de données la puissance d'alimentation pour la station (7) satellite, et par un amplificateur (3) de tension qui régule le générateur (2) de courant, qui est relié côté entrée à la ligne (6) de transmission de données, qui est alimenté en un signal (Uref) de référence de tension et qui est couplé par sa sortie à une entrée de commande du générateur (2) de courant.

2. Système de transmission de données suivant la revendication 1, caractérisé en ce qu'il est présent dans la station (7) satellite et/ou dans la station (1) centrale un générateur (10, 12) de courant pour la production des impulsions de courant représentant les données à transmettre, qui sont superposées à la tension de repos présente sur la ligne (6) de transmission de données, de préférence en ayant un signe différent.

3. Système de transmission de données suivant la revendication 1 ou 2, caractérisé en ce qu'il est prévu dans la station (1) centrale et/ou dans la station (7) satellite un comparateur (4, 5, 14, 15) à fenêtre relié à la ligne (6) de transmission de données pour la démodulation des données.

4. Système de transmission de données suivant l'une des revendications 1 à 3, caractérisé en ce qu'il est présent dans la station (7) satellite un régulateur (9) de tension, qui est raccordé côté entrée à la ligne (6) de transmission de données qui met à disposition côté sortie la tension d'alimentation pour la station (7) satellite.

5. Système de transmission de données suivant l'une des revendications 1 à 4, caractérisé en ce que la ligne de transmission de données est terminée des deux côtés par une terminaison (11) d'impédance caractéristique, notamment sous la forme d'un élément RC série.

6. Système de transmission de données suivant l'une des revendications 1 à 5, caractérisé en ce que la fréquence limite de la régulation de passe-bas du générateur (2) de courant est inférieure sensiblement d'un ordre de grandeur à la fréquence de transmission de données.

7. Système de transmission de données suivant l'une des revendications précédentes, caractérisé en ce que les données à transmettre sont, dans la station (7) satellite, couplées à la ligne (6) de transmission de données sous la forme d'impulsions codées, notamment codées par AMI, à polarité positive et négative, et sont démodulées dans la station (1) centrale.
